# EUROPÄISCHE PATENTSCHRIFT

(11) **EP 1 716 545 B1**
(45) Veröffentlichungstag und Bekanntmachung des Hinweises auf die Patenterteilung: **02.04.2008**
(21) Anmeldenummer: 05715314.0
(22) Anmeldetag: 12.02.2005
(51) Int. Cl.: G07D 7/12

(54) **WERTGEGENSTAND MIT MOIRÉ-MUSTER**
OBJECT OF VALUE COMPRISING A MOIRE PATTERN
OBJET DE VALEUR AYANT UN MOTIF MOIRE

(30) Priorität: 16.02.2004 DE 102004007379
(43) Veröffentlichungstag der Anmeldung: 02.11.2006
(73) Patentinhaber: OVD Kinegram AG, 6301 Zug (CH)
(72) Erfinder: HANSEN, Achim, CH-6300 Zug (CH)
(74) Vertreter: Zinsinger, Norbert
(86) Internationale Anmeldenummer: PCT/EP2005/001428
(87) Internationale Veröffentlichungsnummer: WO 2005/078669

(56) Entgegenhaltungen:
- EP-A- 0 930 979
- US-A- 4 892 336
- US-A- 5 712 731
- US-A1- 2003 161 017
- US-A1- 2004 084 893
- US-B1- 6 381 071

## Beschreibung

Die Erfindung betrifft einen Wertgegenstand, beispielsweise eine Kreditkarte, eine Banknote oder einen Ausweis, mit einer Trägerschicht, beispielsweise einem Papierträger, und mindestens einem auf der Trägerschicht aufgebrachten optischen Sicherheitselement, das eine ein Moiré-Muster enthaltende erste Schicht aufweist.

Moiré-Effekte treten bei einer Vielzahl von natürlichen und künstlichen Strukturen auf. Weiter ist die Verwendung von Moiré-Strukturen als Sicherheitselement im Bereich der Herstellung und Anwendung von Banknoten bekannt.

So beschreibt beispielsweise EP 0 930 979 B1 eine Banknote, die zwei voneinander beabstandete transparente Fenster aufweist. Ein erster transparenter und im wesentlichen identifizierungszeichenfreier Bereich enthält ein erstes Moiré-induzierendes Muster, das aus einem Satz eng beabstandeter feiner Linien besteht. In einem zweiten transparenten und im wesentlichen identifizierungsfreien Bereich der Banknote ist ein zweites Moiré-induzierendes Muster beinhaltet, welches ebenfalls aus einem Satz eng beabstandeter feiner Linien besteht. Die feinen Linien des ersten Moiré-induzierenden Musters sind im wesentlichen parallel zueinander in transversaler Richtung quer über die Banknote angeordnet. Die feinen Linien des zweiten Moiré-induzierenden Musters erstrecken sich im wesentlichen parallel zueinander in Richtung der Längsachse der Banknote. Wird die Banknote über sich entlang einer vorgegebenen Faltlinie gefaltet, so wird der erst und der zweite Bereich in Deckung gebracht und damit die Moiré-induzierenden Muster dieser Bereiche überlagert. Bei Betrachtung in transmittierendem Licht wird bei einer derartigen Überlagerung eine Serie von dunklen Bändern sichtbar, die sich diagonal auf der gefalteten Banknote erstrecken und auch als Talbotstreifen bekannt sind.

Das zweite Moiré-induzierende Muster wird demnach als Analysator zum Nachweis des in dem ersten Moiré-induzierenden Muster enthaltenen latenten Moiré-Bildes verwendet.

Der Erfindung liegt nun die Aufgabe zugrunde ein neuartiges und verbessertes Moire-basiertes Sicherheitsmerkmal bereitzustellen.

Diese Aufgabe wird von einem Wertgegenstand gemäß Anspruch 1 gelöst.

Ein derartiges neuartiges Moiré-Bild ist als Sicherheitselement im Bereich der Herstellung und Anwendung von Banknoten, Personal- und Ausweisdokumenten, Wertdokumenten sowie der Produkt- und Warensicherung verwendbar. Weiter ist auch ein Einsatz im dekorativen Bereich und in der Werbung möglich. Unter einem Moiré-Muster ist hierbei ein aus sich wiederholenden Strukturen gebildetes Muster zu verstehen, das bei Überlagerung mit oder in Betrachtung durch ein weiteres, von sich wiederholenden Strukturen gebildetes Muster, das als Moiré-Analysator wirkt, ein neues Muster, nämlich ein Moiré-Bild, zeigt, dass in dem Moiré-Muster versteckt ist. Im einfachsten Fall ergibt sich dieser Moiré-Effekt aus der Überlagerung dunkler und heller Streifen, die gemäß eines Linienrasters angeordnet sind, wobei dieses Linienraster bereichsweise zur Erzeugung des Moiré-Bildes phasenverschoben ist. Neben einem linearen Lieneraster ist es auch möglich, dass die Linien des Linienrasters gekrümmte Bereiche aufweisen und beispielsweise wellenförmig oder kreisförmig angeordnet sind. Weiter ist es auch möglich, ein auf zwei oder mehr gegeneinander verdrehte oder sich überlagernde Linienraster aufbauendes Moiré-Muster zu verwenden. Die Dekodierung des Moiré-Bildes in einem derartigen Linienraster erfolgt ebenfalls durch einen bereichsweise Phasenverschiebung des Linienrasters, wobei sich in einem derartigen Moiré-Muster zwei oder mehr verschiedene Moiré-Bilder kodieren lassen. Weiter ist auch der Einsatz von Moiré-Mustern und Moiré-Analysatoren möglich, die auf der sogenannten "Scrambled Indicia^{®}"-Technologie oder auf einem Lochmuster (runde, ovale, eckige Löcher diverser Ausgestaltung) basieren.

Ein oder mehrere permanent vorhandene Moiré-Bilder können in einen erfindungsgemäßen Wertgegenstand integriert sein und gegebenenfalls mit latenten Moiré-Bildern und/oder separaten Moiré-Analysatoren kombiniert sein. Durch die Erfindung werden die Nachteile der oben beschriebenen Moiré-basierten Sicherheitselemente vermieden: Es ist nicht mehr notwendig, ein System mit mindestens zwei getrennten Objekten zu verwenden. Ein derartiges System mit getrennten Objekten hat sich in vielen Fällen als in der Anwendung nicht praktikabel erwiesen und verursachte erhebliche Kosten. So ist beispielsweise die Herstellung von Banknoten, die über zwei beabstandete transparente Bereiche mit einem Moiré-Muster einerseits und einem Moiré-Analysator andererseits verfügen, technisch sehr aufwendig und kostenintensiv. Zudem bedarf es auch hier eines aktiven Übereinanderbringen von latentem Moiré-Bild und Analysator. Im Gegensatz hierzu wird von der Erfindung ein kostengünstiges, aber sehr schwer nachahmbares Sicherheitsmerkmal bereitgestellt, welches sich weiter durch ein hohes Maß an Anwenderfreundlichkeit auszeichnet.

Vorteilhafte Ausgestaltung der Erfindung sind in den Unteransprüchen bezeichnet.

Erfindüngsgemäß, die erste Schicht und eine zweite Schicht auf gegenüberliegenden Seiten der Trägerschicht anzuordnen, so dass ein permanentes Moiré-Bild bei Betrachtung im Durchlicht sichtbar wird. Bei Betrachtung im Auflicht erschließt sich so für den Betrachter eine andere optische Information, als dies bei Betrachtung im Durchlicht der Fall ist. Damit wird ein leicht überprüfbares Sicherheitsmerkmal bereitgestellt.

Es ist hierbei vorteilhaft Moiré-Muster einzusetzen, die extrem sensible auf den Versatz des Moiré-Analysators sowohl in x, als auch in y Richtung reagieren. Solche Moiré-Muster basieren beispielsweise auf gekrümmten Linienrastern oder zwei oder mehr sich überlagernden Linienrastern. Sowohl das Aufbringen der ersten und zweiten Schicht auf der selben Seite als auch das Aufbringen der ersten Schicht auf der ersten Seite und der zweiten Sicht auf der anderen Seite der Trägerschicht erfordert bei derarten Moiré-Mustern ein hohes Maß an Passgenauigkeit der hierfür verwendeten Transfer oder Druckverfahren, da bereits geringe Abweichung zu einer erheblichen Verfälschung des Moiré-Bildes führen können. Insbesondere der passergenaue beidseitige Druck stellt erhebliche Anforderungen (Super Simultan Druck), so dass eine Nachahmung dieses Sicherheitsmerkmals nur sehr schwer möglich ist. Im Weiteren werden auch hohe Anforderungen an das das Moiré-Muster und/oder den Moiré-Analysator generierende Verfahren gestellt, da bereits geringe Abweichung, beispielsweise in der Linienführung, das sich ergebende Moiré-Muster deutlich verändern können.

Es besteht jedoch auch die Möglichkeit, ein in ein oder mehrere Richtungen gegnüber dem Versatz des Moiré-Analysators tolerantes Moiré-Muster einzusetzen, so dass der Wertgegenstand besonders kostengünstig gefertigt werden kann.

Der Wertgegenstand weist zwei oder mehr zweite Schichten auf die jeweils einen Moiré-Analysator für das Moiré-Muster der ersten Schicht enthalten. Diese Schichten sind derart übereinander angeordnet, dass sich die Moiré-Muster der ersten Schicht und die Moiré-Analysatoren der zweiten Schicht zumindest bereichsweise permanent optisch überlagern, wodurch zwei oder mehr permanente Moiré-Bilder generiert werden. Durch diese Vorgehensweise wird die Fälschungssicherheit weiter erhöht. Bei dieser Vorgehensweise ist es dann auch möglich, den einen Moiré-Analysator auf der einen Seite der Trägerschicht und den anderen Moiré-Analysator auf der anderen Seite der Trägerschicht anzuordnen, so dass bei Betrachtung im Durchlicht ein erstes Moiré-Bild und bei Betrachtung im Auflicht ein zweites Moiré-Bild sichtbar ist.

Weitere vorteilhafte Effekte lassen sich dadurch erzielen, dass für den Moiré-Analysator der zweiten Schicht oder das Moiré-Muster der ersten Schicht ein UV Farbstoff oder ein IR Farbstoff verwendet wird, so dass das Moiré-Bild nur bei Bestrahlung mit UV-Licht oder bei Bestrahlung mit IR-Strahlung generiert wird. So wird das Moiré-Bild beispielsweise nur bei Betrachtung unter einer UV-Lampe sichtbar oder das Moiré-Bild enthält eine maschinenlesbare Information, die nur mittels eines IR-Lesekopfs auswertbar ist. Auch eine Kombination von visuellen- und UV/IR Moiré-Bildern ist möglich.

Weitere Vorteile lassen sich dadurch erzielen, dass für die zweite Schicht und/oder die erste Schicht eine in Form eines Moiré-Analysators bzw. Moiré-Musters ausgeformte Polarisationsschicht verwendet wird, so dass das Moiré-Bild nur bei Betrachtung mittels eines Polarisators sichtbar wird. Je nachdem, ob das Wertdokument mit oder ohne Polarisator betrachtet wird oder abhängig von der Winkellage des Polarisators ergeben sich so unterschiedliche Betrachtungseindrücke.

Weiter ist es auch möglich, dass die zweite Schicht und/oder die erste Schicht weitere funktionelle Eigenschaften besitzen und so beispielsweise eine in Form eines Moiré-Analysators bzw. Moiré-Musters ausgeformte maschinenlesbare magnetschische Schicht oder eine in Form eines Moiré-Analysators bzw. Moiré-Musters ausgeformte Antenne für einen in dem Wergegenstand integrierten Chip bilden.

Es hat sich als zweckmäßig erwiesen, dass die erste, das Moiré-Muster enthaltene Schicht aus einer verdruckbaren Substanz besteht, die zumindest bereichsweise musterförmig in Form des Moiré-Musters auf der Trägerschicht aufgebracht ist. Die verdruckbare Substanz kann hierbei beispielsweise aus einem Bindemittel und Farbpigmenten oder Effektpigmenten bestehen, insbesondere Interferenzschichtpigmenten oder Flüssigkristallpigmenten. Durch den Einsatz derartiger Pigmente wird die Fälschungssicherheit weiter erhöht.

Weiter kann die Fälschungssicherheit dadurch erhöht werden, dass die erste Schicht aus einer partiell metallisierten Schicht besteht, die zumindest bereichsweise musterförmig in Form des Moiré-Musters ausgeformt ist. Weiter kann zur Erhöhung der Fälschungssicherheit als erste Schicht eine Replikationsschicht verwendet werden, in der eine beugungsoptisch wirksame Oberflächenstruktur abgeformt ist, in der das Moiré-Muster eingebracht ist.

Gemäß eines bevorzugten Ausführungsbeispiels der Erfindung ist die zweite Schicht teil einer Übertragungslage einer Transferfolie, die auf die erste Schicht oder die der ersten Schicht gegenüberliegenden Seite der Trägerschicht aufgebracht ist. Diese Übertragungslage kann hierbei eine partiell metallisierte, in Form eines Moiré-Analysators ausgeformte Metallschicht aufweisen. Weiter ist es auch möglich, dass die Übertragungslage eine Replikationsschicht und eine Reflexionsschicht aufweist, wobei in die Grenzfläche zwischen Replikations- und Reflexionsschicht eine beugungsoptisch wirksame Oberflächenstruktur abgeformt ist und die Reflexionsschicht zumindest bereichsweise musterförmig in Form eines Moire-Analysators ausgeformt ist. Auf diese Weise wird eine Sicherheitsmerkmal von hoher Fälschungssicherheit geschaffen, dessen optische Wirkung auch nur sehr schwer mit anderen Mitteln nachahmbar ist.

Weiter ist es vorteilhaft, dass ein oder mehrere Schichten des Wertgegenstandes, die Moiré-Anatysatoren und/oder Moiré-Muster aufweisen, Teil eines Sicherheitsfadens sind, der auf die Trägerschicht aufgebracht ist.

Gemäß eines weiteren bevorzugten Ausführungsbeispieles kann das Wertdokument mit einem zusätzlichen losen Moiré-Analysator oder einem losen Moiré-Analysator gemäß EP 0 930 979 B1 kombiniert werden.

Im Folgenden wird die Erfindung anhand von mehreren Ausführungsbeispielen unter Zuhilfenahme der beiliegenden Zeichnungen beispielhaft erläutert.
- Fig. 1: zeigt eine schematische Darstellung eines Wertgegenstandes
- Fig. 2: zeigt eine schematische Darstellung eines Wertgegenstands
- Fig. 3: zeigt eine schematische Darstellung eines Wertgegenstandes
- Fig. 4: zeigt eine funktionelle Darstellung, die die Herstellung und den Aufbau eines erfindungsgemäßen Wertgegenstandes verdeutlicht.
- Fig. 5a bis Fig. 5c: zeigen schematische Darstellungen zur Verdeutlichung des Aufbaus und der Funktionsweise eines erfindungsgemäßen Wertgegenstandes.

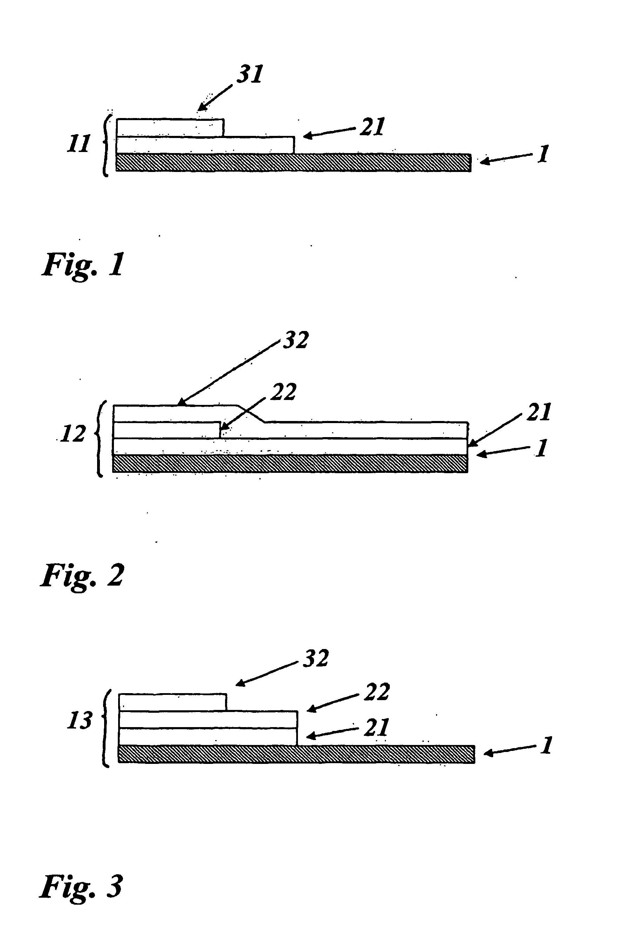

Fig. 1 zeigt einen Ausschnitt aus einer Banknote 11; die eine Trägerschicht 1 und ein auf die Trägerschicht aufgebrachtes optisches Sicherheitselement aufweist, das aus einer ein Moiré-Muster enthaltenen Schicht 21 und einer einen Moiré-Analysator enthaltenden Schicht 31 besteht.

Die Trägerschicht 1 wird von dem Papier- oder Kunststoffträger der Banknote 11 gebildet, und besitzt eine weiße oder helle Eigenfarbe und unter Umständen einen Aufdruck in Form von Zeichnungen oder Mustern. Weiter kann die Banknote 11 selbstverständlich weitere Sicherheitsmerkmale, wie beispielsweise Wasserzeichen, Stahltiefdruck, Sicherheitsfaden oder lumineszierende oder magnetische Aufdrucke oder ähnliches aufweisen.

Ein Moiré-Muster ist ein aus sich wiederholenden Strukturen gebildetes Muster, das bei Überlagerung mit oder in Betrachtung durch ein weiteres, von sich wiederholenden Strukturen gebildetes Muster, das als Moiré-Analysator wirkt, ein neues Muster, nämlich ein Moiré-Bild, zeigt, dass in dem Moiré-Muster versteckt ist. Im einfachsten Fall ergibt sich dieser Moiré-Effekt aus der Überlagerung dunkler und heller Streifen, wobei in Bereichen, in denen die dunklen Streifen des Moiré-Musters und des Moiré-Analysators aufeinander fallen, heller erscheinen, als Bereiche, in denen die dunklen Streifen des Moiré-Musters und des Moiré-Analysators nebeneinander liegen. So ist es beispielsweise möglich, dass das Moiré-Muster aus einem Linienraster mit einer Vielzahl von Linien mit einem Linienabstand im Bereich von 40 bis 200 µm besteht und dieses Linienraster bereichsweise zur Erzeugung des Moiré-Bildes phasenverschoben ist. Die Phasenverschiebung beträgt hierbei vorzugsweise eine halbe Raster-Periode. Ein derartiges Moiré-Bild ist mittels eines Moiré-Analysators dekodierbar, der über eine Linienraster mit dem selben Linienabstand verfügt.

Neben einem linearen Linienraster ist es auch möglich, dass die Linien des Linienrasters gekrümmte Bereiche aufweisen und beispielsweise wellenförmig oder kreisförmig angeordnet sind. Auch in diesem Fall kann das Moiré-Bild durch eine entsprechende bereichsweise Phasenverschiebung des gekrümmten Linienrasters kodiert werden. Zur Dekodierung eines derartig versteckten Moiré-Bildes wird ein entsprechender Moiré-Analysator verwendet, der über ein dem Linienraster des Moiré-Musters (ohne Phasenverschiebungen) entsprechendes Linienraster verfügt. Auf diese Weise ist es möglich, eine Dekodierung des Moiré-Bildes nur mittels eines ganz speziellen dem Moiré-Musters zugeordneten Moiré-Analysators zu ermöglichen.

Weiter ist es auch möglich, ein auf zwei gegeneinander verdrehten Linienrastern aufbauendes Moiré-Muster zu verwenden. Die Dekodierung des Moiré-Bildes in ein derartiges Linienraster erfolgt ebenfalls durch einen bereichsweise Phasenverschiebung des Linienrasters, wobei sich in einem derartigen Moiré-Muster zwei verschiedene Moiré-Bilder kodieren lassen. Durch Verwendung eines ersten Moiré-Analysators kann hierbei das erste Moiré-Bild sichtbar gemacht werden und durch Verwendung eines zweiten Moiré-Analysators oder durch eine andere Winkelpositionierung des ersten Moiré-Analysator kann ein zweites Moiré-Bild sichtbar gemacht werden.

Durch Anwendung dieser Prinzipien ist es dann weiterhin auch möglich, auch mehr als zwei Moiré-Bilder in einem Moiré-Muster zu kodieren, durch die Überlagerung zweier Moiré-Muster ein weiteres Moiré-Muster zu generieren oder ein Moiré-Bild durch die Überlagerung eines Moiré-Musters mit zwei oder mehr Moiré-Analysatoren sichtbar zu machen. Vorteilhaft ist hierbei jeweils bei der Dekodierung des Moiré-Musters darauf zu achten, dass die Flächenbelegung des Moiré-Musters in Bezug auf das Auflösungsvermögen des menschlichen Auges konstant ist, so dass die durch die Phasenverschiebung kodierte Information für den menschlichen Betrachter ohne Zuhilfenahme eines Moiré-Analysators unsichtbar bleibt.

Auf den Papierträger 1 wird nun in einem ersten Schritt die Schicht 1 mittels eines Druckverfahrens, beispielsweise mittels Stahltiefdruck, auf den Papierträger 1 aufgedruckt. Die Schicht 21 besteht so aus einem verdruckbaren Substrat, das vorzugsweise aus einem Bindemittel und Farbpigmenten oder Effektpigmenten besteht.

Die Schicht 21 wird hierbei zumindest bereichsweise in Form eines der oben beschriebenen Moiré-Muster auf den Papierträger 1 aufgedruckt. Neben Bereichen, die mit einem Mairé-Muster versehen sind, kann die Schicht 21 demnach auch andere Bereiche umfassen, in der sonstige Bildinformationen dargestellt sind. Weiter ist es auch möglich, dass die äußere Formgebung der Schicht 21 ein Symbol oder ein Bild-Objekt darstellt, so dass bei Betrachtung der Schicht 21 aus einem üblichen Betrachtungsabstand, beispielsweise 30 cm, dem Betrachter alleine diese äußere Formgebung ins Auge fällt.

Weiter ist es auch möglich, dass die Schicht 21 mittels eines Transferverfahrens, beispielsweise durch Heißprägung, auf dem Papierträger 1 aufgebracht wird. Die Schicht 21 besteht in diesem Fall vorzugsweise aus einer mehrlagigen Übertragungslage einer Heißprägefolie, die eine Schutzlackschicht, eine Replikationsschicht, eine unter Umständen partiell ausgestaltete Reflexionsschicht und eine Kleberschicht aufweist.

Es ist natürlich auch möglich, dass die Übertragungslage weiter ein oder mehrere farbige Dekorationsschichten aufweist oder ein oder mehrere derartiger Schichten anstelle der Replikationsschicht besitzt.

Die Schutzlackschicht einer derartigen Folie hat vorzugsweise eine Dicke von 0,3 bis 1,2 µm und besteht aus einem abriebfesten Akrylat. Die Replikationsschicht besteht vorzugsweise aus einem transparenten, thermoplastischen Kunststoffmaterial, das beispielsweise mittels eines Druckverfahren vollflächig auf der Schutzlackschicht aufgebracht und sodann getrocknet wird. Sodann wird in die Replikationsschicht mittels eines Prägewerkzeugs eine mikroskopische Oberflächenstruktur repliziert und sodann der Replizierlack gegebenenfalls durch Vernetzung oder in sonstiger Weise erhärtet.

Sodann wird auf die Replikationsschicht eine dünne Reflexionsschicht aufgebracht. Bei der Reflexionsschicht handelt es sich vorzugsweise um eine dünne, aufgedampfte Metallschicht oder um eine HRI (HRI = High Reflection Index). Als Materialien für die Metallschicht kommen in wesentlichen Chrom, Aluminium, Kupfer, Eisen, Nickel, Silber, Gold oder eine Legierung mit diesen Materialien in Frage. Als Materialien für eine HRI-Schicht kommen beispielsweise TiO₂, ZnS oder Nb₂O₅ in Frage. Weiter kann anstelle einer derartigen metallischen oder dielektrischen Relexionsschicht auch eine Dünnfilmschichtfolge mit mehreren dielektrischen oder dielektrischen und metallischen Schichten eingesetzt werden.

Anschließend wird auf dem Folienkörper eine Klebeschicht aufgebracht, die beispielsweise aus einem thermisch aktivierbaren Kleber bestehen kann.

Das Moiré-Muster kann in eine derartige Schicht beispielsweise dadurch eingebracht werden, dass die Reflexionsschicht partiell metallisiert oder partiell demetallisiert wird, so dass sich eine musterförmige in Form des Moiré-Musters ausgeformte Reflexionsschicht ergibt. Damit wird das Moiré-Muster durch die reflektierenden bzw. nicht reflektierenden Bereiche der Schicht generiert, wobei das Moiré-Muster von dem durch die mikroskopische Oberflächenstruktur generierten optischen Effekte überlagert wird. Bei der mikroskopischen Oberflächenstruktur kann es sich hierbei beispielsweise um eine diffraktive Struktur handeln, die ein Hologram oder Kinegram^{®} generiert. Es kann sich bei dieser Struktur jedoch auch um eine isotrope oder anisotrope Mattstruktur oder um eine Makrostruktur, beispielsweise eine Mikrolinsenstruktur handeln.

Weiter ist es auch möglich, dass das Moiré-Muster in die Gestaltung der makroskopischen oder mikroskopischen Oberflächenstruktur eingebracht ist. So kann die Oberflächenstruktur beispielsweise einen Hintergrundbereich und einen entsprechenden dem Moiré-Muster ausgeformten Bildbereich aufweisen, wobei in dem Hintergrundbereich und in dem Bildbereich unterschiedliche Strukturen vorgesehen werden, beispielsweise unterschiedliche diffraktive Strukturen und Mattstrukturen, eine diffraktive Struktur und eine plane (reflektierende) Fläche oder eine Mattstruktur und eine plane (reflektierende) Fläche. Auch eine Kombination von Demetallisierung und Eindringer des Moiré-Musters in die Oberflächenstruktur ist möglich. Weiter ist es auch möglich, dass die Oberflächenstruktur ein Hologram oder ein Kinegram^{®} generiert, welches unter unterschiedlichen Betrachtungswinkel unterschiedliche Moiré-Muster zeigt. Bei Verwendung einer derartigen Oberflächenstruktur können unter unterschiedlichen Betrachtungsrichtungen unterschiedliche Moiré-Bilder generiert werden.

Weiter kann die Übertragungslage zusätzlich oder Anstelle der Replikationsschicht auch ein in Form des Moiré-Musters ausgeformtes Dünnfilmschichtsystem aufweisen, das einen Farbwechseleffekt beim Verkippen des Wertdokumentes zeigt.

Auf die Schicht 21 wird nun die Schicht 31 aufgebracht, die einen wie oben beschriebenen Moiré-Analysator ausformt.

Gemäß einem besonders vorteilhaften Ausführungsbeispiel weist die Schicht 31 hierbei eine dünne zumindest bereichsweise in Form des Moiré-Analysators ausgeformte reflektive Schicht, insbesondere eine dünne Metallschicht auf. Als reflektive Schicht für die Schicht 31 kommen hierbei sämtliche bereits oben für die Schicht 21 geschriebenen reflektiven Materialien in Frage. Vorzugsweise wird die Schicht 31 hierbei mittels eines Transferverfahrens, vorzugsweise eines Heißprägeverfahrens, auf die Schicht 21 aufgebracht. Die Schicht 31 besteht somit beispielsweise aus einer transparenten Schutzlackschicht, einer dünnen aufgedampften und partiell demetallisierten Metallschicht und einer Kleberschicht.

Weiter ist es auch möglich, dass die Schicht 31 aus einer verdruckbaren Substanz besteht, die mittels eines Druckverfahrens auf die Schicht 21 aufgedruckt ist. Weiter ist es auch möglich, dass die Schicht 31 eine Replikationsschicht mit einer abgeformten mikroskopischen Oberflächenstruktur aufweist, in der, wie bereits oben in Bezug auf die Schicht 21 beschrieben, ein Moiré-Analysator eingebracht ist.

Besonders vorteilhaft ist hier, ein Moiré-Muster und eine Moiré-Analysator zu verwenden, der nicht an einem Linienraster sondern an einem welligen oder speziell gekrümmten Raster basiert oder die auf zwei oder mehr verschiedenen Rastern basieren (siehe oben). Dadurch ergeben sich besondere Anforderungen an die Passergenauigkeit des Aufbringens der Schicht 31 auf der Schicht 21, da bereits geringe Unterschied zu einer Veränderung des sich bei der Überlagerung ergebenen Moiré-Bildes führen.

Wie bereits in Fig. 1 angedeutet, kann hierbei die Schicht 31 die Schicht 21 nur bereichsweise überlagern. Es ist so möglich, dass sich für den Betrachter ein erster Bereich ergibt, in dem das Moiré-Bild sichtbar ist, ein zweiter Bereich ergibt, in dem der Bildeindruck durch das Moiré-Muster der Schicht 21 bestimmt wird, und ein dritter Bereich ergibt in dem der Bildeindruck durch den Moiré-Analysator der Schicht 31 bestimmt wird. Weiter kann, beispielsweise durch Betrachtung mittels einer Lupe, verifiziert werden, dass in den zweiten und dritten Bereichen die Feinstruktur eines Moiré-Musters vorliegt und der sich in dem ersten Bereich ergebende Eindruck durch die Überlagerung dieser beiden Muster generiert wird.

Fig. 2 zeigt eine Banknote 12, die drei Schichten 21, 22 und 32 aufweist.

Bei den Schichten 21 und 22 handelt es sich jeweils um eine einen Moiré-Muster enthaltene Schicht, wobei sich die Moiré-Muster der Schichten 21 und 22 unterscheiden. Die Schichten 21 und 22 können hierbei wie die Schicht 21 nach Fig. 1 ausgestaltet sein. Auf die Schichten 21 und 22 ist die Schicht 32 aufgebracht, die einen Moiré-Analysator für die Moiré-Muster der Schichten 21 und 22 enthält. Die Schicht 32 besteht hierbei vorzugsweise aus einer druckbaren Substanz, die beispielsweise mittels Stahltiefdruck auf die Schichten 21 und 22 aufgedruckt ist. Prinzipiell kann die Schicht 32 hierbei jedoch wie die Schicht 31 nach Fig. 1 ausgestaltet sein.

Die Schicht 32 enthält einen Moiré-Analysator für die Moiré-Bilder der Schichten 22 und 21, so dass in dem Bereich des Moiré-Musters der Schicht 22 ein erstes Moiré-Bild und in dem Bereich des Moiré-Musters der Schichten 21 ein zweites Moiré-Bild generiert wird.

Weiter ist es auch möglich, dass im Bereich der Schicht 22 eine Überlagerung der Muster der Schicht 21, der Schicht 22 und der Schicht 32 stattfindet, wobei das Moiré-Muster der Schichten 22 und 21 sich, wie bereits oben beschrieben, zu einem Moiré-Muster ergänzen, welches das durch den Moiré-Analysator der Schicht 32 sichtbar gemachte Moiré-Bild enthält. Damit ist für die unverfälschte Generierung des Moiré-Bildes im Bereich der Schicht 22 erforderlich, dass sowohl die Schicht 22 als auch die Schicht 32 passergenau auf die Schicht 21 aufzubringen sind.

Fig. 3 zeigt eine Banknote 13, die die Trägerschicht 1, die Schicht 21, die Schicht 22 und die Schicht 32 aufweist. Die Schichten 21, 22 und 32 sind hierbei wie die entsprechend bezeichneten Schichten nach den Figuren Fig. 1 und Fig. 2 ausgestaltet.

In dem durch Fig. 3 verdeutlichten Fall wirkt das in der Schicht 22 enthaltene Moire-Muster in dem Bereich, in dem die Schicht 22 nicht von der Schicht 32 bedeckt ist, als Moiré-Analysator für die Generierung des in der Schicht 21 enthaltenen Moiré-Bildes. In dem Bereich, in dem die Schicht 22 von der Schicht 32 bedeckt ist, ergeben sich die bei dem Ausführungsbeispiel nach Fig. 2 erläuterten Effekte.

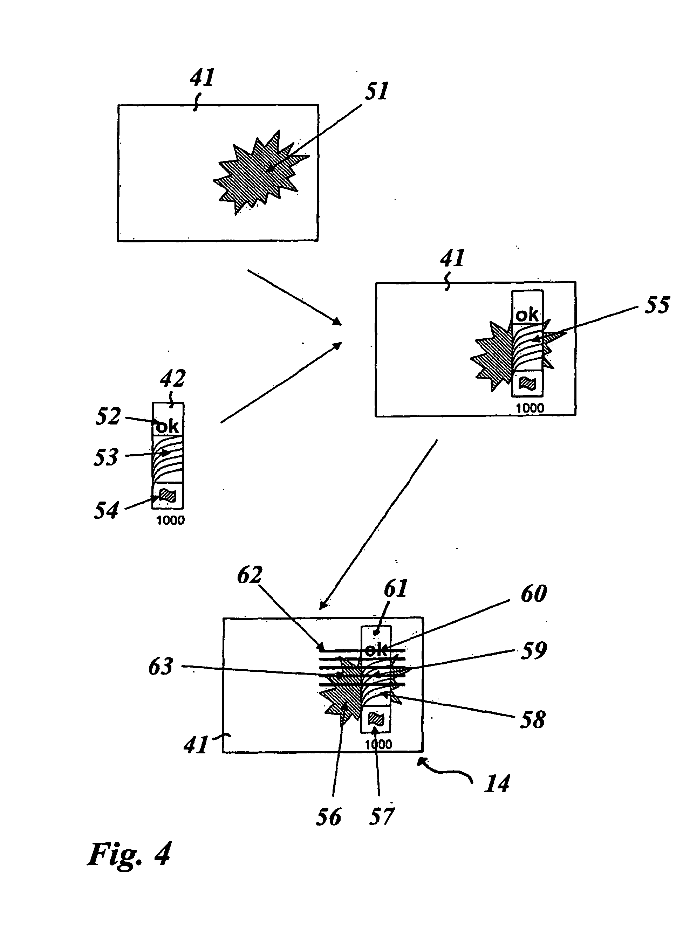

Fig. 4 verdeutlicht eine weitere Anwendungskombination der oben verdeutlichten Prinzipien:

Fig. 4 zeigt eine Banknote 41, auf deren Papierträger in einem Bereich 51 ein Moire-Muster aufgedruckt wird. Sodann wird auf die Banknote 41 ein optisches Sicherheitselement 42 aufgebracht, das aus einer Übertragungslage einer Transferfolie, insbesondere einer Heißprägefolie besteht. Das optische Sicherheitselement 42 weist einen ersten Bereich 52 auf, der ein Kinegram^{®} und ein diffraktives Muster enthält. Das optische Sicherheitselement 42 weist weiter einen Bereich 53 auf, der ein Kinegram^{®} aufweist, das gemäß eines weitern Moiré-Musters partiell demetallisiert ist. Das optische Sicherheitselement 42 weist weiter einen Bereich 54 auf, der ein Kinegram^{®}, jedoch kein Moiré-Muster enthält.

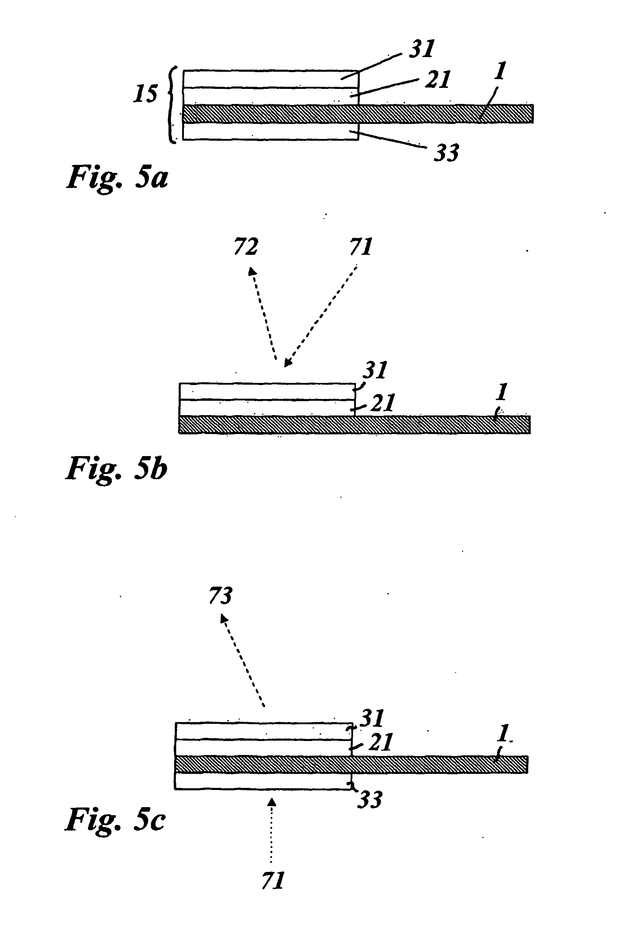

Das optische Sicherheitselement 42 ist hierbei, wie bereits in Bezug auf die Schicht 21 nach Fig. 5a beschrieben, aus einer Replikationsschicht, einer reflektierenden Schicht und einer Kleberschicht aufgebaut, wobei in die Grenzschicht zwischen Replikationsschicht und reflektiver Schicht eine diffraktive Oberflächenstruktur geformt ist, die eine Generierung der Kinegramme ermöglicht.

Nach der Applizierung des optischen Sicherheitselement 42 auf dem Träger 41 ergibt sich im Bereich 55 eine Überlagerung des aufgedruckten Moiré-Musters mit der in dem Bereich 53 eingebrachten Moiré-Muster, so dass in diesem Bereich ein Moiré-Bild generiert wird.

Anschließend wird das Sicherheitselement 42 und das in dem Bereich 51 aufgedruckte Moiré-Muster mit einem als Moiré-Analysator wirkenden Moiré-Muster überdruckt, so dass sich die in Fig. 4 gezeigte Banknote 14 ergibt. In den Bereichen 56 bis 63 der Banknote 14 ergibt sich hier folgender Betrachtungseindruck:

In dem Bereich 56 nimmt der Betrachter einen sternförmigen Aufdruck wahr, der ein für ihn nicht sichtbares Moiré-Muster enthält. In den Bereichen 57 und 61 nimmt der Betrachter jeweils ein Kinegram^{®} wahr.

In dem Bereich 58 nimmt der Betrachter ein erstes Moiré-Bild wahr, das sich aus der Überlagerung des Moiré-Musters des Bereiches 51 und des Moiré-Analysators des Bereiches 53 ergibt. In dem Bereich 63 erkennt der Betrachter ein zweites Moiré-Bild, das sich aus der Überlagerung des Moiré-Musters des Bereiches 56 und des zuletzt aufgedruckten Moiré-Analysators ergibt.

In dem Bereich 59 erkennt der Betrachter ein drittes Moiré-Bild, das sich aus der Überlagerung des Moiré-Musters 56, des Moiré-Musters des Bereiches 53 und des zuletzt aufgedruckten Moiré-Analysators ergibt.

In dem Bereich 60 erkennt der Betrachter ein viertes, diffraktives Moiré-Bild, das sich aus der Überlagerung des Moiré-Musters des Bereiches 52 mit dem zuletzt aufgedruckten Moiré-Analysator ergibt.

Ein Ausführungsbeispiel der Erfindung wird nun anhand der Figuren Fig. 5a bis Fig. 5c erläutert.

Fig. 5a zeigt eine Banknote 15, die den Träger 1, die Schicht 21, die Schicht 31 und eine Schicht 33 aufweist. Die Schichten 21 und 31 sind wie die Schichten 21 und 31 nach Fig. 1 ausgestaltet, das heißt, die Schicht 21 enthält ein Moiré-Muster und die Schicht 31 enthält einen Moiré-Anlaysator. Die Schicht 33 ist wie die Schicht 22 nach Fig. 2 ausgestaltet und enthält ein Moiré-Muster, das als Moiré-Analysator oder als einer das Moiré-Muster 21 überlagerndes Moiré-Muster wirkt. Der Träger 1 ist bei dem Ausführungsbeispiel nach Fig. 5a mindestens in dem Bereich, in dem die Schicht 21 aufgebracht ist, transparent oder halbtransparent ausgeführt.

Bei der Betrachtung im Auflicht ergibt sich der in Fig. 5b dargestellte Effekt:

Einfallendes Licht 71 durchdringt die Schichten 31 und 21, wird reflektiert und bestimmt sodann den Betrachtungseindruck des Betrachters. Hier ergibt sich der bereits anhand von Fig. 1 erläuterte Effekt, das dem Betrachter ein Moiré-Bild 72 sichtbar wird, welches von der Überlagerung des Moiré-Musters der Schicht 21 und des Moiré-Analysators der Schicht 31 bestimmt wird.

Bei Betrachtung im Durchlicht ergibt sich der in Fig. 5c dargestellte Effekt:

Das einfallende Licht 71 durchdringt die Schichten 33, 1, 21 und 31, so dass für den Betrachter ein Moiré-Bild 73 erkennbar wird, das sich aus der Überlagerung der Moiré-Muster der Schichten 33 und 21 sowie des Moiré-Analysators 31 ergibt.

Weiter ist es auch möglich, dass auf der Schicht 33 eine weitere Schicht aufgebracht ist, die einen Moiré-Analysator enthält. Damit wird bei Betrachtung im Auflicht von der ersten Seite ein erstes Moiré-Bild, bei Betrachtung im Auflicht von der anderen Seite ein zweites Moiré-Bild und bei Betrachtung im Durchlicht ein drittes Moiré-Bild sichtbar.

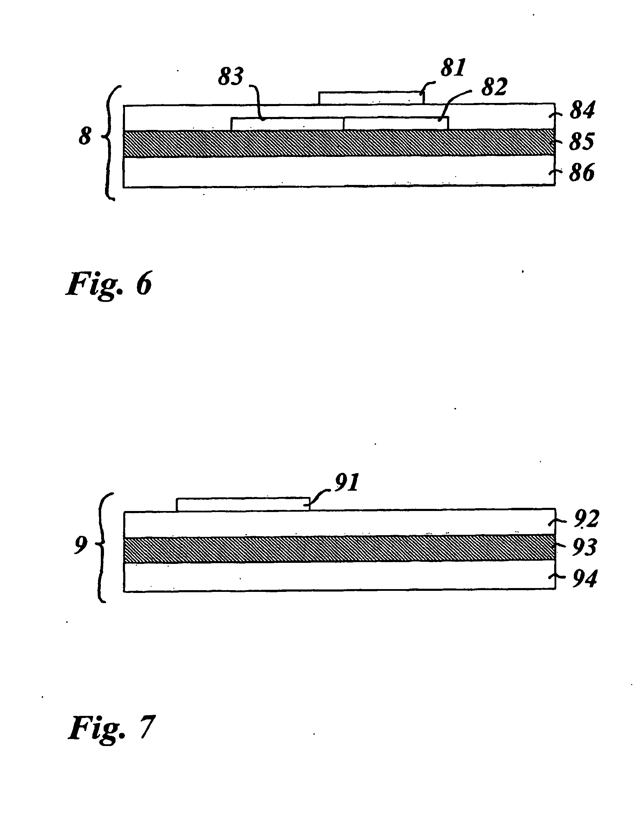

Weitere Ausführungsbeispiele der Erfindung werden nun anhand der Figuren Fig. 6 und Fig. 7 erläutert.

Fig. 6 verdeutlicht beispielhaft den Aufbau einer Polycarbonatkarte, die beispielsweise als Ausweis, Geld, Wert oder Scheckkarte verwendet werden kann. Diese Polycarbonatkarte weist ein innenliegendes Kinegram^{®} auf.

Fig. 6 zeigt eine Karte 8, die einen Träger-Körper 85, zwei Schutz-Schichten 84 und 86 sowie eine bereichsweise auf dem Träger-Körper 85 aufliegende Schicht mit einem ersten Schichtbereich 83 und einem zweiten Schichtbereich 82 und einer Schicht 81.

Bei dem Trägerkörper 85 handelt es sich um einen Polycarbonat-Kern, der mit einem Moiré-Muster bedruckt ist.

Die Schicht mit den Bereichen 82 und 83 weist eine Replizierschicht mit abgeformter diffraktiver Struktur auf, wobei durch diese diffraktive Struktur in dem Bereich 83 ein erstes transparentes Kinegram und in dem Bereich 82 ein zweites transparentes Kinegram generiert wird. Diese Schicht besteht so beispielsweise aus der Übertragungslage einer Heißprägefolie, die diese Replikationsschicht sowie eine Kleberschicht mit sich von der Replikationsschicht unterscheidendem Brechungsindex aufweist.

Die Schicht 81 besteht aus einem Aufdruck, der in Form eines Moiré-Analysators ausgeformt ist.

Die Kinegrame in den Bereichen 82 und 83 sind hierbei so gewählt, dass sie blickwinkelabhängig zwei oder mehr verschiedene Moiré-Muster zeigen. Abhängig von dem Blickwinkel, unter dem ein Betrachter die Karte 8 betrachtet, werden in dem Bereich 83 somit das ein oder das andere dieser Moiré-Muster mit dem Moiré-Muster des Folienkörpers 85 überlagert, so dass sich blickwinkelabhängig unterschiedliche Moiré-Bilder für den Betrachter ergeben. In dem Bereich 82 überlagern sich die Moiré-Muster der Schicht 81, des Träger-Körpers 85 und des in dem Bereich 82 generierten Kinegrams, so dass sich auch hier blickwinkelabhängig unterschiedliche Moiré-Muster ergeben. Ist, wie in Fig. 6 gezeigt, der Aufdruck der Schicht 81 nicht passergenau zu dem Bereich 82 durchgeführt, so ergeben sich weitere Teilbereiche, in denen weitere Moiré-Bilder sichtbar werden.

Fig. 7 zeigt nun beispielhaft den Aufbau einer Polycarbonatkarte, die ein an der Oberfläche appliziertes Kinegram aufweist.

Fig. 7 zeigt eine Schicht 91, zwei Schutzschichten 92 und 94 und einen Träger-Körper 93.

Der Träger-Körper 93 besteht aus einem Polycarbonat-Kern, auf den ein Moiré-Muster aufgedruckt ist.

Die Schicht 91 besteht beispielsweise aus der Übertragungslage einer Heißprägefolie, die eine Klebeschicht, eine Replikationsschicht und eine Schutzschicht aufweist, wobei zwischen Replikationsschicht und Klebeschicht eine ein Kinegram generierende diffraktive Struktur abgeformt ist. Im Bereich dieser diffraktiven Struktur wird so von der Schicht 91 ein transparentes Kinegram generiert. Dieses Kinegram besitzt die bereits bei Fig. 6 erläuterten Eigenschaften, blickwinkelabhängig zwei oder mehr unterschiedliche Moiré-Muster bereitzustellen. Diese Moiré-Muster dienen als Moiré-Analysatoren für das auf dem Träger-Körper 93 aufgedruckte Moiré-Muster, so dass blickwinkelabhängig in dem Bereich der Schicht 91 unterschiedliche Moiré-Bilder sichtbar sind.

## Patentansprüche

1. Wertgegenstand (11, 12, 13, 14, 15), beispielsweise Kreditkarte, Banknote oder Ausweis, mit einer Trägerschicht (1, 41), beispielsweise einem Papierträger, und mit mindestens einem auf der Trägerschicht (1, 41) aufgebrachten optischen Sicherheitselement, das eine ein Moiré-Muster enthaltende erste Schicht (21, 22) aufweist, wobei der Wertgegenstand (11, 12, 13, 14, 15) eine einen Moiré-Analysator für das Moiré-Muster der ersten Schicht (21, 22) enthaltende zweite Schicht (31, 32, 33) aufweist, die oberhalb oder unterhalb der ersten Schicht (21, 22) in fester Lage zu der ersten Schicht derart angeordnet ist, wobei sich das Moiré-Muster der ersten Schicht (21, 22) und der Moiré-Analysator der zweiten Schicht (31, 32, 33) zumindest bereichsweise permanent optisch überlagern, wodurch ein Moiré-Bild generiert wird,
**dadurch gekennzeichnet,**
**dass** der Wertgegenstand (12, 13, 14, 15) zwei oder mehr zweite Schichten (32, 33, 22) aufweist, die jeweils einen Moiré-Analysator für das Moiré-Muster der ersten Schicht (21, 22) enthalten, dass eine der zweiten Schichten (31) auf der gleichen Seite der Trägerschicht (1) wie die erste Schicht (21) angeordnet ist und eine weitere der zweiten Schichten (33) auf der gegenüberliegenden Seite der Trägerschicht (1) angeordnet ist, so dass bei Betrachtung im Durchlicht ein erstes Moiré-Bild und bei Betrachtung im Auflicht ein zweites Moiré-Bild sichtbar ist.

2. Wertgegenstand (11, 12, 13, 14, 15) nach Anspruch 1,
**dadurch gekennzeichnet,**
**dass** die erste Schicht aus einer verdruckbaren Substanz besteht, die zumindest bereichsweise musterförmig in Formen des Moiré-Musters, insbesondere auf die Trägerschicht (1) aufgebracht ist.

3. Wertgegenstand (11,12,13,14,15) nach Anspruch 2,
**dadurch gekennzeichnet,**
**dass** die verdruckbare Substanz aus Bindemittel und Farbpigmenten oder Effektpigmenten besteht, insbesondere Interferenzschichtpigmenten oder Flüssigkristallpigmenten.

4. Wertgegenstand nach einem der vorgehenden Ansprüche,
**dadurch gekennzeichnet,**
**dass** die erste Schicht aus einer partiell ausgeformten Metallschicht besteht, wobei die metallisierten oder nicht metallisierten Bereiche der Metallschicht zumindest bereichsweise musterförmig in Form des Moiré-Musters ausgeformt sind.

5. Wertgegenstand nach einem der vorgehenden Ansprüche,
**dadurch gekennzeichnet**
**dass** die erste Schicht aus einer Replikationsschicht besteht, in die eine beugungsoptisch wirksame Oberflächenstruktur abgeformt ist, in der das Moiré-Muster eingebracht ist.

6. Wertgegenstand nach Anspruch 5,
**dadurch gekennzeichnet,**
**dass** die beugungsoptisch wirksame Oberflächenstruktur ein Hologramm oder Kinegram® enthält, das aus unterschiedlichen Betrachtungswinkeln unterschiedliche Moiré-Muster zeigt, so dass unter unterschiedlichen Betrachtungsrichtungen unterschiedliche Moiré-Bilder generiert werden.

7. Wertgegenstand nach einem der vorgehenden Ansprüche,
**dadurch gekennzeichnet,**
**dass** die erste Schicht aus einem partiell ausgeformten Dünnfilmschichtsystem besteht, das einen Farbwechseleffekt mittels Interferenz erzeugt, wobei das Dünnfilmschichtsystem zumindest bereichsweise musterförmig in Form des Moiré-Musters ausgeformt ist.

8. Wertgegenstand nach einem der vorgehenden Ansprüche,
**dadurch gekennzeichnet,**
**dass** die zweite Schicht aus einer verdruckbaren Substanz besteht, die zumindest bereichsweise musterförmig in Form des Moiré-Analysators, insbesondere auf die erste Schicht oder die der ersten Schicht gegenüberliegende Seite der Trägerschicht, aufgebracht ist.

9. Wertgegenstand nach Anspruch 8,
**dadurch gekennzeichnet,**
**dass** die verdruckbare Substanz UV-Farbpigmente oder IR-Farbpigmente enthält, so dass das Moiré-Bild nur bei Bestrahlung mit UV Strahlung oder bei Bestrahlung mit IR Strahlung generiert wird.

10. Wertgegenstand nach einem der vorgehenden Ansprüche,
**dadurch gekennzeichnet,**
**dass** die erste und/oder die zweite Schicht aus einer partiell ausgeformten Polarisationsschicht besteht, wobei die Polarisationsschicht zumindest bereichsweise musterförmig in Form des Moiré-Analysators bzw. des Moiré-Musters ausgeformt ist.

11. Wertgegenstand (11, 12, 13, 14, 15) nach einem der vorgehenden Ansprüche,
**dadurch gekennzeichnet,**
**dass** die zweite Schicht (31, 32) Teil einer Übertragungslage einer Transferfolie ist, die auf die erste Schicht (21) oder die der ersten Schicht gegenüberliegenden Seite der Trägerschicht (1) aufgebracht ist.

12. Wertgegenstand nach Anspruch 11,
**dadurch gekennzeichnet,**
**dass** die Übertragungslage eine partiell ausgeformte Metallschicht aufweist, wobei die metallisierten oder nicht metallisierten Bereiche der Metallschicht zumindest bereichsweise musterförmig in Form des Moiré-Analysators ausgeformt ist.

13. Wertgegenstand nach einem der Ansprüche 11 oder 12,
**dadurch gekennzeichnet,**
**dass** die Übertragungslage eine Replikationsschicht und eine Reflexionsschicht, insbesondere eine Metallschicht, aufweist, wobei in die Grenzfläche zwischen Replikationsschicht und Reflexionsschicht eine beugungsoptisch wirksame Oberflächenstruktur abgeformt ist und die Reflexionsschicht zumindest bereichsweise musterförmig in Form des Moiré-Analysators ausgeformt ist.

14. Wertgegenstand nach einem der vorgehenden Ansprüche,
**dadurch gekennzeichnet,**
**dass** der Wertgegenstand einen nicht in fester Lage zu der ersten Schicht und den zweiten Schichten angeordneten losen Moiré-Analysator aufweist, der so ausgestaltet ist, dass ein Moiré-Bild generiert wird, wenn der lose Moiré-Analysator mit der ersten und/oder einer zweiten Schicht zur Deckung gebracht wird.

## Claims

1. Valuable article (11, 12, 13, 14, 15), for example a credit card, banknote or identity card, having a carrier layer (1, 41), for example a paper carrier, and having at least one optical security element which is applied on the carrier layer (1, 41) and has a first layer (21, 22) containing a Moiré pattern, wherein the valuable article (11, 12, 13, 14, 15) has a second layer (31, 32, 33) containing a Moiré analyser for the Moiré pattern of the first layer (21, 22), the second layer (31, 32, 33) being arranged above or beneath the first layer (21, 22) in a fixed position relative to the first layer such that at least regions of the Moiré pattern of the first layer (21, 22) and of the Moiré analyser of the second layer (31, 32, 33) optically superpose each other permanently, thus generating a Moiré image, **characterized in that** the valuable article (12, 13, 14, 15) has two or more second layers (31, 32, 33) which each contain a Moiré analyser for the Moiré pattern of the first layer (21, 22), **in that** one of the second layers (31) is arranged on the same side of the carrier layer (1) as the first layer (21) and another one of the second layers (33) is arranged on the opposite side of the carrier layer (1), so that a first Moiré image is visible when viewed in transmitted light and a second Moiré image is visible when viewed in reflected light.

2. Valuable article (11, 12, 13, 14, 15) according to Claim 1, **characterized in that** the first layer is made of a printable substance applied, at least in regions, in a pattern-type manner in the form of the Moiré pattern in particular on the carrier layer (1).

3. Valuable article (11, 12, 13, 14, 15) according to Claim 2, **characterized in that** the printable substance is made of a binder and colour pigments or effect pigments, in particular interference layer pigments or liquid crystal pigments.

4. Valuable article according to one of the preceding claims, **characterized in that** the first layer is made of a partially shaped metal layer, with the metallized or non-metallized regions of the metal layer being shaped, at least in regions, in a pattern-type manner in the form of the Moiré pattern.

5. Valuable article according to one of the preceding claims, **characterized in that** the first layer is made of a replication layer into which an optically diffractively active surface structure, into which the Moiré pattern is introduced, is impressed.

6. Valuable article according to Claim 5,
**characterized in that** the optically diffractively active surface structure contains a hologram or Kinegram® which shows different Moiré patterns from different viewing angles such that different Moiré images are generated from different viewing directions.

7. Valuable article according to one of the preceding claims, **characterized in that** the first layer is made of a partially shaped thin-film layer system producing a colour change effect by means of interference, the thin-film layer system being shaped, at least in regions, in a pattern-type manner in the form of the Moiré pattern.

8. Valuable article according to one of the preceding claims, **characterized in that** the second layer is made of a printable substance which is applied, at least in regions, in a pattern-type manner in the form of the Moiré analyser in particular on the first layer or that side of the carrier layer which lies opposite the first layer.

9. Valuable article according to Claim 8,
**characterized in that** the printable substance contains UV colour pigments or IR colour pigments, so that the Moiré image is generated only during irradiation with UV radiation or during irradiation with IR radiation.

10. Valuable article according to one of the preceding claims, **characterized in that** the first and/or the second layer is made of a partially shaped polarization layer, the polarization layer being shaped, at least in regions, in a pattern-type manner in the form of the Moiré analyser or the Moiré pattern.

11. Valuable article (11, 12, 13, 14, 15) according to one of the preceding claims, **characterized in that** the second layer (31, 32) is part of a transfer layer of a transfer film which is applied on the first layer (21) or that side of the carrier layer (1) which lies opposite the first layer.

12. Valuable article according to Claim 11,
**characterized in that** the transfer layer has a partially shaped metal layer, wherein the metallized or non-metallized regions of the metal layer are shaped, at least in regions, in a pattern-type manner in the form of the Moiré analyser.

13. Valuable article according to either of Claims 11 and 12, **characterized in that** the transfer layer has a replication layer and a reflection layer, in particular a metal layer, wherein an optically diffractively active surface structure is impressed into the interface between replication layer and reflection layer and the reflection layer is shaped, at least in regions, in a pattern-type manner in the form of the Moiré analyser.

14. Valuable article according to one of the preceding claims, **characterized in that** the valuable article has a loose Moiré analyser which is not arranged in a fixed position relative to the first layer and the second layers, with the Moiré analyser being designed such that a Moiré image is generated if the loose Moiré analyser is brought to congruence with the first and/or a second layer.

## Revendications

1. Objet de valeur (11, 12, 13, 14, 15), par exemple carte de crédit, billet de banque ou pièce d'identité, avec une couche de support (1, 41), par exemple un support en papier, et avec au moins un élément de sécurité optique appliqué sur la couche de support (1, 41), qui comporte une première couche (21, 22) contenant un motif moiré, l'objet de valeur (11, 12, 13, 14, 15) comportant une seconde couche (31, 32, 33) contenant un analyseur de moiré pour le motif moiré de la première couche (21, 22) qui est disposée sur ou sous la première couche (21, 22) de manière fixe par rapport à la première couche de cette manière, le motif moiré de la première couche (21, 22) et l'analyseur de moiré de la seconde couche (31, 32, 33) se chevauchant optiquement en permanence au moins partiellement, générant une image de moiré,
**caractérisé en ce que**
l'objet de valeur (12, 13, 14, 15) comporte deux secondes couches (32, 33, 22) ou plus qui contiennent chacune un analyseur de moiré pour le motif moiré de la première couche (21, 22), **en ce qu'**une des secondes couches (31) est disposée sur la même face de la couche de support (1) que la première couche (21) et **en ce qu'**une autre des secondes couches (33) est disposée sur la face opposée de la couche de support (1), de telle manière qu'une première image moirée est visible lorsqu'on regarde par transparence et une deuxième image moirée lorsqu'on regarde par incidence.

2. Objet de valeur (11, 12, 13, 14, 15) selon la revendication 1,
**caractérisé en ce**
**que** la première couche est composée d'une substance pouvant être imprimée qui est, au moins partiellement, appliquée comme motif sous la forme du motif moiré, en particulier sur la couche de support (1).

3. Objet de valeur (11, 12, 13, 14, 15) selon la revendication 2,
**caractérisé en ce**
**que** la substance pouvant être imprimée est composée de liants et de pigments de couleur ou de pigments à effets, en particulier de pigments d'interférence à couches ou de pigments aux cristaux liquides.

4. Objet de valeur selon une des revendications précédentes,
**caractérisé en ce**
**que** la première couche est composée d'une couche métallique en partie formée, les zones métallisées ou non métallisées de la couche métallique étant au moins partiellement formées comme motif sous la forme du motif moiré.

5. Objet de valeur selon une des revendications précédentes,
**caractérisé en ce**
**que** la première couche est composée d'une couche de réplique dans laquelle une structure de surface efficace sur le plan de la diffraction optique, dans laquelle le motif moiré est inséré, est moulée.

6. Objet de valeur selon la revendication 5,
**caractérisé en ce**
**que** la structure de surface efficace sur le plan de la diffraction optique contient un hologramme ou Kinegram® qui montre différents motifs moirés à partir de différents angles d'observation, si bien que différentes images de moiré sont générées dans différentes directions d'observation.

7. Objet de valeur selon une des revendications précédentes,
**caractérisé en ce**
**que** la première couche est composée d'un système de couche à film mince partiellement formé qui génère un effet de changement de couleur au moyen d'une interférence, le système de couche à film mince étant au moins partiellement formé comme motif ayant les formes du motif moiré.

8. Objet de valeur selon une des revendications précédentes,
**caractérisé en ce**
**que** la seconde couche est composée d'une substance pouvant être imprimée qui est appliquée au moins partiellement comme motif sous la forme de l'analyseur de moiré, en particulier sur la première couche ou sur la face de la couche de support qui fait face à la première couche.

9. Objet de valeur selon la revendication 8,
**caractérisé en ce**
**que** la substance pouvant être imprimée contient des pigments de couleur UV ou des pigments de couleur IR, de telle manière que l'image de moiré n'est générée qu'en cas d'exposition à un rayonnement UV ou d'exposition à un rayonnement IR.

10. Objet de valeur selon une des revendications précédentes,
**caractérisé en ce**
**que** la première et/ou la seconde couche sont composées d'une couche de polarisation partiellement formée, la couche de polarisation étant au moins partiellement formée comme motif sous la forme de l'analyseur de moiré et/ou de du motif moiré.

11. Objet de valeur (11, 12, 13, 14, 15) selon une des revendications précédentes,
**caractérisé en ce**
**que** la seconde couche (31, 32) fait partie d'une couche de transfert d'un film de transfert qui est appliquée sur la première couche (21) ou sur la face de la couche de support (1) qui fait face à la première couche.

12. Objet de valeur selon la revendication 11,
**caractérisé en ce**
**que** la couche de transfert comporte une couche métallique partiellement formée, les zones métallisées ou non métallisées de la couche métallique étant au moins partiellement formées comme motif sous la forme de l'analyseur de moiré.

13. Objet de valeur selon une des revendications 11 ou 12,
**caractérisé en ce**
**que** la couche de transfert comporte une couche de réplique et une couche de réflexion, en particulier une couche métallique, une structure de surface efficace sur le plan de la diffraction optique étant moulée dans la surface limite entre la couche de réplique et la couche de réflexion et la couche de réflexion étant, au moins partiellement, formées comme motif sous la forme de l'analyseur de moiré.

14. Objet de valeur selon une des revendications précédentes,
**caractérisé en ce**
**que** l'objet de valeur comporte un analyseur de moiré mobile disposé dans une position qui n'est pas fixe par rapport à la première couche et aux secondes couches et est configuré de telle manière qu'une image de moiré est générée lorsque l'analyseur de moiré mobile recouvre la première et/ou une seconde couche.
